# EUROPEAN PATENT APPLICATION

(11) **EP 4 614 325 A1**
(43) Date of publication of application: **10.09.2025**
(21) Application number: 22966294.5
(22) Date of filing: 26.11.2022
(51) Int. Cl.: G06F 9/54

(54) **COMMUNICATION METHOD AND APPARATUS**

(71) Applicant: Shenzhen Yinwang Intelligent Technologies Co., Ltd., Shenzhen, Guangdong 518129 (CN)
(72) Inventor: LIU, Huayi, Shenzhen, Guangdong 518129 (CN); WU, Shiliang, Shenzhen, Guangdong 518129 (CN)
(74) Representative: Maiwald GmbH
(86) International application number: PCT/CN2022/134528
(87) International publication number: WO 2024/108608

(57) **Abstract**

Embodiments of this application provide a communication method and apparatus. The method includes: A first device determines second data based on first data, where the first data and the second data meet a data type mapping relationship, and the data type mapping relationship includes a conversion relationship between data formats of different protocols; the first device generates third data based on the second data, where the third data includes the second data and description information of the second data; and the first device sends a first message to a second device, where the first message includes a data packet header and the third data. According to embodiments of this application, a problem that data collection tool software, driving status visualization tool software, and the like that are developed based on one platform cannot be used together with software developed based on another platform can be resolved, and high-risk open-source software does not need to be installed. Therefore, development is simple, and maintenance costs are low.

## Description

### TECHNICAL FIELD

This application relates to the field of communication technologies, and in particular, to a communication method and apparatus.

### BACKGROUND

As society advances, intelligent vehicles are gradually entering people's daily life. In the field of intelligent driving, automotive enterprises usually choose to develop intelligent driving systems based on easy-to-obtain and easy-to-use communication middleware, for example, a robot operating system (robot operating system, ROS).

An automotive open system architecture (automotive open system architecture, AUTOSAR) adaptive platform (Adaptive Platform) is an industry standard proposed for an on-board high-performance computing platform, and has numerous advantages in assisting with the design, development, and meeting automotive-grade certification of the on-board high-performance computing platform. When developing intelligent driving systems on the AUTOSAR adaptive platform, the automotive enterprises use communication management (communication management, CM) middleware provided by the AUTOSAR adaptive platform to implement inter-software communication.

During the development of the intelligent driving system, a series of data collection tool software, driving status visualization tool software, and the like need to be used. These pieces of tool software also need to be developed based on the same communication middleware as the intelligent driving system, to implement communication with intelligent driving system software. In this way, these pieces of tool software are also deeply coupled with the selected communication middleware.

If the automotive enterprises have developed intelligent driving software by using the ROS platform, to apply the intelligent driving software to a vehicle, the intelligent driving software needs to be ported to an on-board computing platform developed based on the AUTOSAR adaptive platform. Communication middleware of the ROS platform is different from that of the AUTOSAR adaptive platform. Therefore, data collection tool software, driving status visualization tool software, and the like that are developed based on the ROS platform cannot be used together.

### SUMMARY

This application discloses a communication method and apparatus, to resolve a problem that data collection tool software, driving status visualization tool software, and the like that are developed based on one platform cannot be used together with software developed based on another platform. In addition, high-risk open-source software does not need to be installed. Therefore, development is simple, and maintenance costs are low.

According to a first aspect, this application provides a communication method, applied to an intelligent driving scenario. The method includes: A first device determines second data based on first data, where the first data and the second data meet a data type mapping relationship, and the data type mapping relationship includes a conversion relationship between data formats of different protocols; the first device generates third data based on the second data, where the third data includes the second data and description information of the second data; and the first device sends a first message to a second device, where the first message includes a data packet header and the third data.

In the foregoing method, in a manner in which the first device determines the second data based on the first data, the first data that supports a protocol in the first device may be converted into the second data that supports a protocol in the second device, and in a manner in which the first device generates the third data based on the second data, the third data can be correctly parsed by communication middleware in the second device. According to this application, cross-communication middleware and cross-device communication between the first device and the second device that are between different communication middleware can be implemented, to resolve a problem that data collection tool software, driving status visualization tool software, and the like that are developed on one platform cannot be used together with software developed based on another platform. High-risk open-source software does not need to be installed on the first device, development is simple, and maintenance costs are low.

In a possible implementation, the first data and the second data have different data formats, and the first data and the second data carry same information.

In still another possible implementation, the description information of the second data includes one or more of the following: a data format of the second data, a length of the second data, or a message digest algorithm 5 MD 5 code of the second data.

In still another possible implementation, the data packet header includes one or more of the following: an action field, an identifier field, or a length field, where the action field indicates a type of the first message, the identifier field indicates a topic, or the identifier field indicates a topic and a receiving component and a sending component of the third data, and the length field indicates a length of the third data.

In still another possible implementation, the action field is a first value, the first value indicates that the first message is a publish message, and the publish message is used by the second device to send the third data to the receiving component indicated by the identifier field; or the action field is a second value, the second value indicates that the first message is a subscription message, and the subscription message is used to enable the receiving component indicated by the identifier field to send, to the sending component indicated by the identifier field, information that meets a subscription requirement indicated by the third data.

In still another possible implementation, the first device is a device that uses an automotive open system architecture AUTOSAR platform, and the second device is a device that uses a platform other than the AUTOSAR platform.

In still another possible implementation, the first device is an on-board computing platform, and the second device is a cockpit device.

According to a second aspect, this application provides an intelligent driving device. The intelligent driving device includes a first device and a second device. The first device is configured to: determine second data based on first data, where the first data and the second data meet a data type mapping relationship, and the data type mapping relationship includes a conversion relationship between data formats of different protocols; generate third data based on the second data, where the third data includes the second data and description information of the second data; and send a first message to the second device, where the first message includes a data packet header and the third data. The second device is configured to: receive the first message; and if the first message is a publish message, store the third data included in the first message; or if the first message is a subscription message, send a response message to the first device, where the response message includes data that meets a subscription requirement indicated by the third data.

In a possible implementation, the second device is further configured to: parse the first message; and determine that the first message is the publish message or the subscription message.

In still another possible implementation, the first data and the second data have different data formats, and the first data and the second data carry same information.

In still another possible implementation, the description information of the second data includes one or more of the following: a data format of the second data, a length of the second data, or a message digest algorithm 5 MD 5 code of the second data.

In still another possible implementation, the data packet header includes one or more of the following: an action field, an identifier field, or a length field, where the action field indicates a type of the first message, the identifier field indicates a topic, or the identifier field indicates a topic and a receiving component and a sending component of the third data, and the length field indicates a length of the third data.

In still another possible implementation, the action field is a first value, the first value indicates that the first message is the publish message, and the publish message is used by the second device to send the third data to the receiving component indicated by the identifier field; or the action field is a second value, the second value indicates that the first message is the subscription message, and the subscription message is used to enable the receiving component indicated by the identifier field to send, to the sending component indicated by the identifier field, information that meets the subscription requirement indicated by the third data.

In still another possible implementation, the first device is a device that uses an automotive open system architecture AUTOSAR platform, and the second device is a device that uses a platform other than the AUTOSAR platform.

In the foregoing method, when the first device is the device that uses the automotive open system architecture AUTOSAR platform, and the second device is the device that uses the platform other than the AUTOSAR platform, the first device implements inter-software communication by using communication management CM middleware on the AUTOSAR platform, and the second device implements inter-software communication by using communication middleware on the platform other than the AUTOSAR platform. According to this application, cross-communication middleware and cross-device communication between the first device and the second device that are between different communication middleware can be implemented.

In still another possible implementation, the first device is an on-board computing platform, and the second device is a cockpit device.

For technical effects brought by the second aspect or the possible implementations, refer to the descriptions of the technical effects brought by the first aspect or the corresponding implementations.

According to a third aspect, this application provides a communication apparatus. The communication processing apparatus includes a processor and a memory. The memory and the processor are interconnected through a line. The processor is configured to: obtain a computer program stored in the memory. When the computer program is executed by the processor, the communication method in the first aspect and the implementations of the first aspect is performed.

According to a fourth aspect, this application provides a computer-readable storage medium, where the computer-readable storage medium stores computer instructions, and when the computer instructions are runs on a processor, the method in the first aspect and the implementations of the first aspect is implemented.

According to a fifth aspect, this application provides a computer program product, where the computer program product includes computer program code, and when the computer program code is run on a computer, the method in the first aspect and the implementations of the first aspect is implemented.

According to a sixth aspect, this application provides a chip, where the chip includes a circuit, and the circuit is configured to implement the method in the first aspect and the implementations of the first aspect.

### BRIEF DESCRIPTION OF DRAWINGS

FIG. 1 is a diagram of a structure of an intelligent driving device according to an embodiment of this application;
FIG. 2 is a diagram of another structure of an intelligent driving device according to an embodiment of this application;
FIG. 3 is a diagram of a traveling control apparatus for an intelligent driving device according to an embodiment of this application;
FIG. 4 is a diagram of communication between an AUTOSAR platform and an ROS platform according to an embodiment of this application;
FIG. 5 is another diagram of communication between an AUTOSAR platform and an ROS platform according to an embodiment of this application;
FIG. 6 is a schematic flowchart of a communication method according to an embodiment of this application;
FIG. 7 is a diagram of a data type mapping relationship according to an embodiment of this application;
FIG. 8 is a diagram of a format of a first message according to an embodiment of this application;
FIG. 9 is a diagram of a process of processing a first message according to an embodiment of this application;
FIG. 10 is a diagram of a structure of a communication apparatus according to an embodiment of this application;
FIG. 11 is a diagram of an intelligent driving device according to an embodiment of this application; and
FIG. 12 is a diagram of another structure of a communication apparatus according to an embodiment of this application.

### DESCRIPTION OF EMBODIMENTS

The following describes embodiments of this application with reference to the accompanying drawings in embodiments of this application.

In this application, the term "example", "for example", or the like is used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

"First", "second", "third", "fourth", and the like mentioned in embodiments of this application are used to distinguish between different objects, but are not used to describe a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

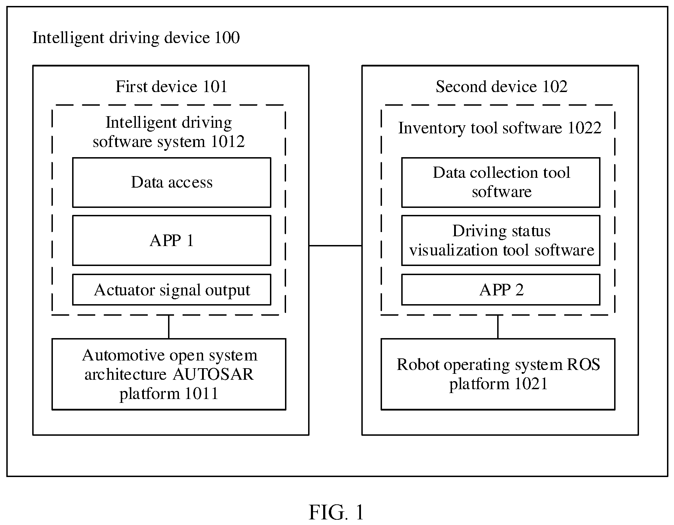

FIG. 1 is a diagram of a structure of an intelligent driving device 100 according to an embodiment of this application. The intelligent driving device 100 includes a first device 101 and a second device 102. The first device 101 may be a device that uses an automotive open system architecture (automotive open system architecture, AUTOSAR) platform, and the second device 102 may be a device that uses a platform other than the AUTOSAR platform. For example, the second device 102 may be a device that uses a robot operating system (robot operating system, ROS) platform. Correspondingly, the first device 101 may include an AUTOSAR platform 1011, and the second device 102 may include a platform other than the AUTOSAR platform, for example, an ROS platform 1021. Alternatively, the first device 101 may be a device that uses a platform other than the AUTOSAR platform. For example, the first device 101 may be a device that uses the ROS platform, and the second device 102 may be a device that uses the AUTOSAR platform. Correspondingly, the first device 101 may include a platform other than the AUTOSAR platform, for example, the ROS platform, and the second device 102 may include the AUTOSAR platform. This is not limited in this embodiment of this application. In the following example, unless otherwise specified, the first device is a device that uses the AUTOSAR platform, and the second device is a device that uses the ROS platform. Optionally, the first device 101 may be an on-board computing platform, and the second device 102 may be a cockpit device. Optionally, the first device 101 may include an intelligent driving software system 1012. The intelligent driving software system 1012 includes three pieces of application software: data access, an APP 1, and an actuator signal output. Each module in the intelligent driving software system 1012 uses communication management (communication management, CM) middleware in an AUTOSAR adaptive platform (Adaptive Platform) to implement message communication between software/services. Optionally, the second device 102 may include inventory tool software 1022. The inventory tool software 1022 includes three pieces of application software: data collection tool software, driving status visualization tool software, an APP 2, and the like. All these pieces of tool software use middleware other than the CM middleware, for example, an ROS middleware, to implement message communication between software and services. It should be noted that the intelligent driving device shown in FIG. 1 is applicable to a development, commissioning, or running scenario of an intelligent driving system. This is not limited in embodiments of this application.

It may be understood that the structure of the intelligent driving device in FIG. 1 is merely an example implementation in embodiments of this application. The intelligent driving device in embodiments of this application may further include more components as required.

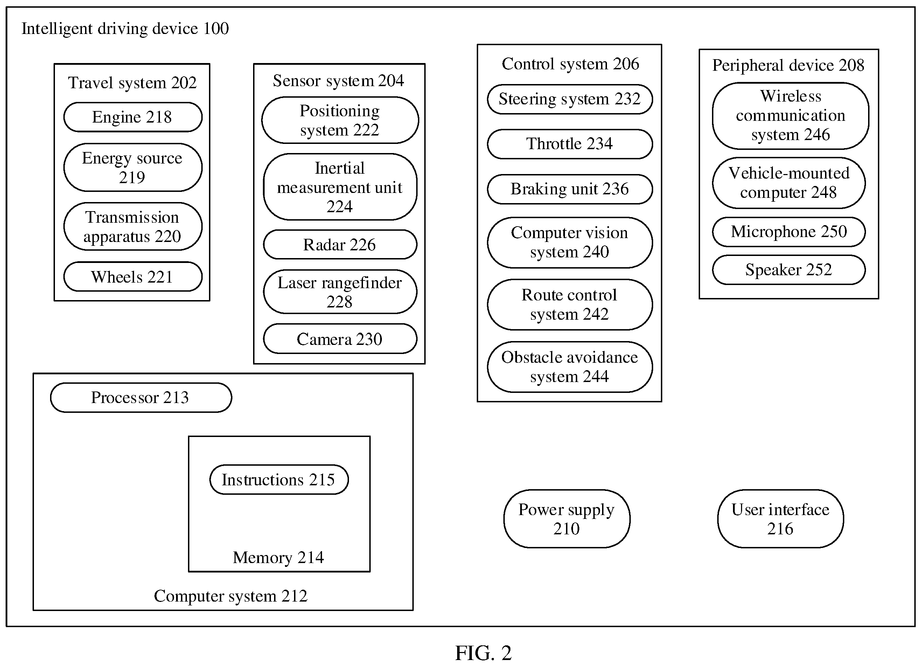

FIG. 2 further describes the structure of the intelligent driving device 100 based on FIG. 1. The intelligent driving device 100 may include various subsystems, such as a travel system 202, a sensor system 204, a control system 206, one or more peripheral devices 208, a power supply 210, a computer system 212, and a user interface 216. Optionally, the intelligent driving device 100 may include more or fewer subsystems, and each subsystem may include a plurality of elements. In addition, all subsystems and elements of the intelligent driving device 100 may be interconnected in a wired or wireless manner.

The travel system 202 may include a component that provides power for the intelligent driving device 100 to move. In an embodiment, the travel system 202 may include an engine 218, an energy source 219, a transmission apparatus 220, and wheels/tires 221. The engine 218 may be an internal combustion engine, a motor, an air compression engine, or a combination of other types of engines, for example, a hybrid engine including a gasoline engine and a motor or a hybrid engine including an internal combustion engine and an air compression engine. The engine 218 converts the energy source 219 into mechanical energy.

Examples of the energy source 219 include gasoline, diesel, other petroleum-based fuels, propane, other compressed gas-based fuels, anhydrous alcohol, a photovoltaic module, a battery, and other power sources. The energy source 219 may also provide energy for another system of the intelligent driving device 100.

The transmission apparatus 220 may transmit mechanical power from the engine 218 to the wheels 221. The transmission apparatus 220 may include a gearbox, a differential, and a drive shaft. In an embodiment, the transmission apparatus 220 may further include another device, for example, a clutch. The drive shaft may include one or more shafts that may be coupled to one or more wheels 221.

The sensor system 204 may include several sensors that sense information about an ambient environment of the intelligent driving device 100. For example, the sensor system 204 may include a positioning system 222 (the positioning system may be a GPS system, a BeiDou system, or another positioning system), an inertial measurement unit (inertial measurement unit, IMU) 224, a radar 226, a laser rangefinder 228, and a camera 230. The sensor system 204 may further include a sensor (for example, an in-vehicle air quality monitor, a fuel gauge, or an engine oil temperature gauge) of an internal system of the monitored intelligent driving device 100. Sensor data from one or more of these sensors can be used to detect an object and corresponding features (a location, a shape, a direction, a speed, and the like) of the object. Such detection and recognition are key functions of a safe operation of the autonomous intelligent driving device 100.

The positioning system 222 may be configured to estimate a geographical location of the intelligent driving device 100. The IMU 224 is configured to sense a location and an orientation change of the intelligent driving device 100 based on an inertia acceleration. In an embodiment, the IMU 224 may be a combination of an accelerometer and a gyroscope.

The radar 226 may sense an object in a surrounding environment of the intelligent driving device 100 by using a radio signal. In some embodiments, in addition to sensing an object, the radar 226 may be further configured to sense a speed and/or a moving direction of the object.

The laser rangefinder 228 may sense, by using a laser, an object in an environment in which the intelligent driving device 100 is located. In some embodiments, the laser rangefinder 228 may include one or more laser sources, a laser scanner, one or more detectors, and another system component.

The camera 230 may be configured to capture a plurality of images of a surrounding environment of the intelligent driving device 100. The camera 230 may be a static camera or a video camera.

The control system 206 controls operations of the intelligent driving device 100 and components of the intelligent driving device 100. The control system 206 may include various elements, including a steering system 232, a throttle 234, a braking unit 236, a computer vision system 240, a route control system 242, and an obstacle avoidance system 244.

The steering system 232 may be operated to adjust a traveling direction of the intelligent driving device 100. For example, in an embodiment, the steering system 232 may be a steering wheel system.

The throttle 234 is configured to control an operation speed of the engine 218 and further control a speed of the intelligent driving device 100.

The braking unit 236 is configured to control the intelligent driving device 100 to decelerate. The braking unit 236 may slow down the wheels 221 through friction. In another embodiment, the braking unit 236 may convert kinetic energy of the wheels 221 into a current. The braking unit 236 may also slow down a rotational speed of the wheel 221 in another form, to control the speed of the intelligent driving device 100.

The computer vision system 240 may be operated to process and analyze an image captured by the camera 230, to recognize an object and/or a feature in an ambient environment of the intelligent driving device 100, and/or process and analyze data information captured by the radar 226. The object and/or the feature may include a traffic signal, a road boundary, and an obstacle. The computer vision system 240 may use an object recognition algorithm, a structure from motion (structure from motion, SFM) algorithm, video tracking, and another computer vision technology. In some embodiments, the computer vision system 240 may be configured to draw a map for an environment, track an object, estimate a speed of an object, and the like.

The route control system 242 is configured to determine a traveling route of the intelligent driving device 100. In some embodiments, the route control system 242 may determine a traveling route for the intelligent driving device 100 with reference to data from the positioning system 222 and one or more predetermined maps.

The obstacle avoidance system 244 is configured to identify, evaluate, and avoid or otherwise bypass a potential obstacle in an environment of the intelligent driving device 100.

Certainly, in an example, the control system 206 may additionally or alternatively include components other than those shown and described. Alternatively, some of the foregoing components may be removed.

The intelligent driving device 100 interacts with an external sensor, another vehicle, another computer system, or a user through the peripheral device 208. The peripheral device 208 may include a wireless communication system 246, a vehicle-mounted computer 248, a microphone 250, and/or a speaker 252.

In some embodiments, the peripheral device 208 provides a means for a user of the intelligent driving device 100 to interact with the user interface 216. For example, the vehicle-mounted computer 248 may provide information for the user of the intelligent driving device 100. The user interface 216 may further operate the vehicle-mounted computer 248 to receive an input of the user. The vehicle-mounted computer 248 may be operated by using a touchscreen. In another case, the peripheral device 208 may provide a means for the intelligent driving device 100 to communicate with another device located in a vehicle. For example, the microphone 250 may receive audio (for example, a voice command or another audio input) from the user of the intelligent driving device 100. Similarly, the speaker 252 may output an audio to the user of the intelligent driving device 100.

The wireless communication system 246 may wirelessly communicate with one or more devices directly or through a communication network, for example, the wireless communication system 246 may use 3G cellular communication such as CDMA, EVDO, or GSM/GPRS, 4G cellular communication such as LTE, or 5G cellular communication. The wireless communication system 246 may communicate with a wireless local area network (wireless local area network, WLAN) through Wi-Fi. In some embodiments, the wireless communication system 246 may directly communicate with a device through an infrared link, Bluetooth, or ZigBee. The wireless communication system 246 may include one or more dedicated short-range communication (dedicated short-range communication, DSRC) devices, and these devices may include public and/or private data communication between vehicles and/or roadside stations.

The power supply 210 may supply power to various components of the intelligent driving device 100. In an embodiment, the power supply 210 may be a rechargeable lithium-ion or lead-acid battery. One or more battery packs of such a battery may be configured as a power supply to supply power to various components of the intelligent driving device 100. In some embodiments, the power supply 210 and the energy source 219 may be implemented together.

Some or all functions of the intelligent driving device 100 are controlled by the computer system 212. The computer system 212 may include at least one processor 213. The processor 213 executes instructions 215 stored in a non-transient computer-readable medium like a memory 214. The computer system 212 may alternatively be a plurality of computing devices that control an individual component or a subsystem of the intelligent driving device 100 in a distributed manner.

The processor 213 may be any conventional processor like a commercially available CPU. Alternatively, the processor may be an ASIC or another hardware-based processor.

In various aspects described herein, the processor may be remote from the vehicle and communicate wirelessly with the vehicle. In other aspects, some of the processes described herein are performed by a processor disposed in the vehicle, and others are performed by a remote processor.

In some embodiments, the memory 214 may include the instructions 215 (for example, program logic), and the instructions 215 may be executed by the processor 213, to perform various functions of the intelligent driving device 100, including the functions described above. The memory 214 may also include additional instructions, including instructions for sending data to, receiving data from, interacting with, and/or controlling one or more of the travel system 202, the sensor system 204, the control system 206, and the peripheral device 208.

In addition to the instructions 215, the memory 214 may further store data and other information. This information may be used by the intelligent driving device 100 and the computer system 212 when the intelligent driving device 100 operates in an autonomous mode, a semi-autonomous mode, and/or a manual mode.

The user interface 216 is configured to provide information for the user of the intelligent driving device 100 or receive information from the user. Optionally, the user interface 216 may include one or more input/output devices within a set of peripheral devices 208, such as the wireless communication system 246, the vehicle-mounted computer 248, the microphone 250, and the speaker 252.

The computer system 212 may control functions of the intelligent driving device 100 based on inputs received from various subsystems (for example, the travel system 202, the sensor system 204, and the control system 206) and the user interface 216. For example, the computer system 212 may control, by using an input from the control system 206, the steering system 232 to avoid obstacles detected by the sensor system 204 and the obstacle avoidance system 244. In some embodiments, the computer system 212 may be operated to provide control over many aspects of the intelligent driving device 100 and the subsystems of the intelligent driving device 100.

Optionally, one or more of the foregoing components may be installed separately from or associated with the intelligent driving device 100. For example, the memory 214 may be partially or completely separated from the intelligent driving device 100. The foregoing components may be communicatively coupled together in a wired and/or wireless manner.

Optionally, the foregoing components are only examples. In practice, components in the foregoing modules may be added or deleted based on an actual requirement. FIG. 2 should not be understood as a limitation on embodiments of this application.

The intelligent driving device 100 may be a car, a truck, a motorcycle, a bus, a ship, an airplane, a helicopter, a lawn mower, a recreational vehicle, a playground vehicle, a construction device, a tram, a golf cart, a train, a cart, a smart home device, or the like. This is not particularly limited in embodiments of this application.

It may be understood that the structure of the intelligent driving device in FIG. 2 is merely an example implementation in embodiments of this application. The intelligent driving device in embodiments of this application includes but is not limited to the foregoing structure.

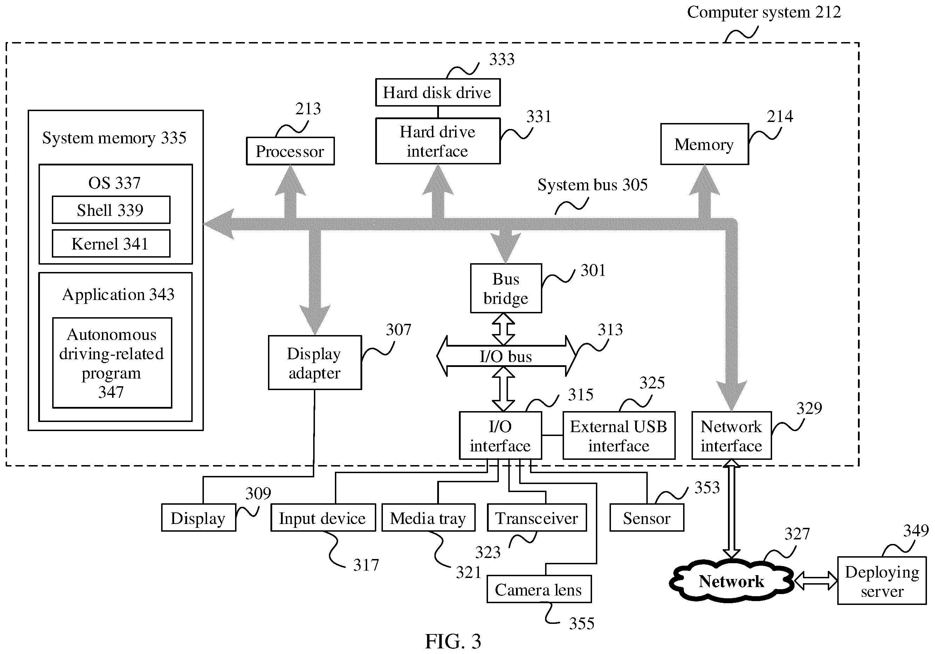

FIG. 3 is a diagram of a traveling control apparatus for an intelligent driving device according to an embodiment of this application. The apparatus is applied to FIG. 2, is equivalent to the computer system 212 shown in FIG. 2, and may include the processor 213. The processor 213 is coupled to a system bus 305. There may be one or more processors 213, and each processor may include one or more processor cores. The memory 214 may store related data information, and the memory 214 is coupled to the system bus 305. The computer system 212 further includes a display adapter (display adapter) 307, and the display adapter 307 may drive a display 309. The system bus 305 is coupled to an input/output (I/O) bus 313 via a bus bridge 301. An I/O interface 315 is coupled to the I/O bus 313. The I/O interface 315 communicates with a plurality of I/O devices. The I/O device may be, for example, an input device 317 (for example, a keyboard, a mouse, or a touchscreen), a media tray (media tray) 321 (for example, a CD-ROM or a multimedia interface), a transceiver 323 (which may send and/or receive a radio communication signal), a camera lens 355 (which may capture a scenery and a dynamic digital video image), and an external USB interface 325. Optionally, an interface connected to the I/O interface 315 may be a USB interface.

The processor 213 may be any conventional processor, including a reduced instruction set computer (reduced instruction set computer, RISC), a complex instruction set computer (complex instruction set computer, CISC), or a combination thereof. Optionally, the processor may be an application-specific integrated circuit ASIC. Optionally, the processor 213 may be a neural network processor or a combination of a neural network processor and the foregoing conventional processor.

Optionally, in various embodiments described in this specification, the computer system 212 may be located far away from the intelligent driving device, and may perform wireless communication with the intelligent driving device. In other aspects, some processes described in this specification are performed on a processor disposed in the intelligent driving device, and others are performed by a remote processor.

The computer system 212 may communicate with a deploying server 349 via a network interface 329. The network interface 329 is a hardware network interface, for example, a network interface card. A network 327 may be an external network, for example, the internet, or an internal network, for example, the Ethernet or a virtual private network (virtual private network, VPN). Optionally, the network 327 may alternatively be a wireless network, for example, a Wi-Fi network or a cellular network.

The transceiver 323 (which may send and/or receive a radio communication signal) may use various wireless communication manners, including but not limited to a 2nd generation mobile communication network (2nd generation mobile network, 2G), 3G, 4G, 5G, and the like, or may use a DSRC technology, a long term evolution vehicle-to-everything technology (long-term evolution vehicle-to-everything, LTE-V2X), or the like. A main function of the transceiver 323 is to receive information data sent by an external device, and send, back to the external device for storage and analysis, information data generated when the intelligent driving device travels on a target road section.

A hard disk drive interface 331 is coupled to the system bus 305. The hard disk drive interface 331 is connected to a hard disk drive 333. A system memory 335 is coupled to the system bus 305. Data running in the system memory 335 may include an operating system 337 and an application 343 of the computer system 212.

The system memory 335 is coupled to the system bus 305. For example, in this application, the system memory 335 may be configured to store, in the memory in a specific format, traveling information of the vehicle traveling on the target road section.

The operating system (operating system, OS) 337 includes a shell (shell) 339 and a kernel (kernel) 341. The shell 339 is an interface between a user and the kernel of the operating system. The shell 339 is at an outermost layer of the operating system. The shell 339 manages interaction between the user and the operating system: waiting for a user input, interpreting the user input to the operating system, and processing various output results of the operating system.

The kernel 341 includes parts of the operating system that are used to manage a memory, a file, a peripheral, and a system resource. When directly interacting with hardware, the kernel of the operating system usually runs a process, provides inter-process communication, and provides CPU time slice management, interrupt management, memory management, I/O management, and the like.

The application 343 includes an autonomous driving-related program 347, for example, a program for managing interaction between an autonomous vehicle and an obstacle on a road, a program for controlling a route or a speed of the autonomous vehicle, and a program for controlling interaction between the autonomous vehicle and another autonomous vehicle on the road. The application 343 also exists in a system of the deploying server (deploying server) 349. In an embodiment, when the autonomous driving-related program 347 needs to be executed, the computer system 212 may download the autonomous driving-related program 347 from the deploying server 349.

A sensor 353 is associated with the computer system 212. The sensor 353 is configured to detect a surrounding environment of the computer system 212. For example, the sensor 353 can detect animals, vehicles, obstacles, pedestrian crosswalks, and the like. Further, the sensor can detect ambient environments of the animals, the vehicles, the obstacles, or the pedestrian crosswalks. For example, the sensor can detect the ambient environment of animals like other animals in the ambient environment, a weather condition, and brightness of the ambient environment. Optionally, if the computer system 212 is located in an autonomous vehicle, the sensor may be a camera lens, an infrared sensor, a chemical detector, a microphone, or the like.

It may be understood that the traveling control apparatus for the intelligent driving device in FIG. 3 is merely an example implementation in embodiments of this application. The traveling control apparatus used in the intelligent driving device in embodiments of this application includes but is not limited to the foregoing structure.

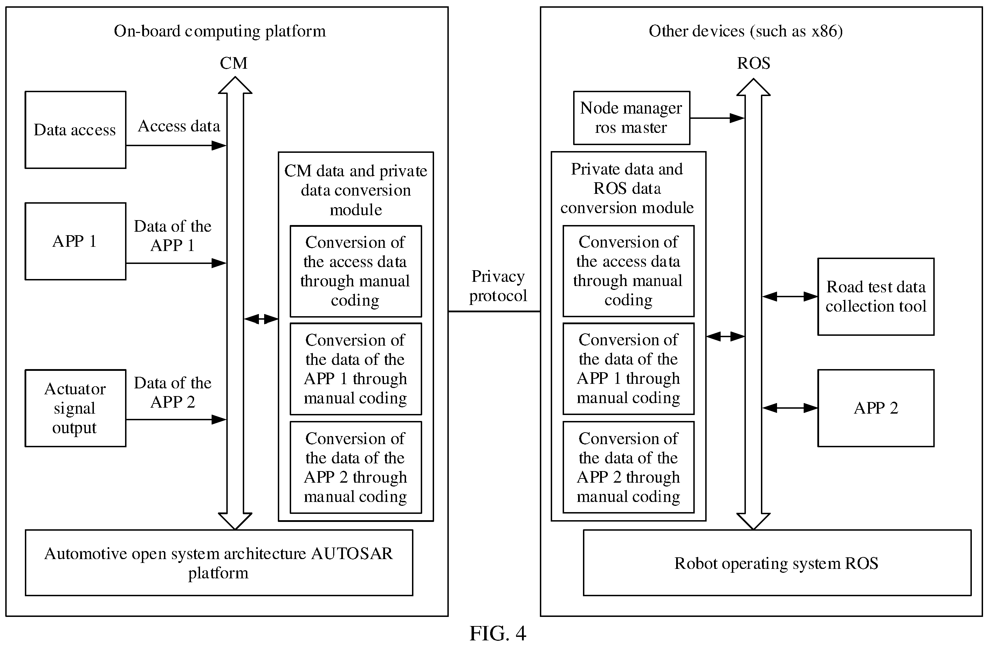

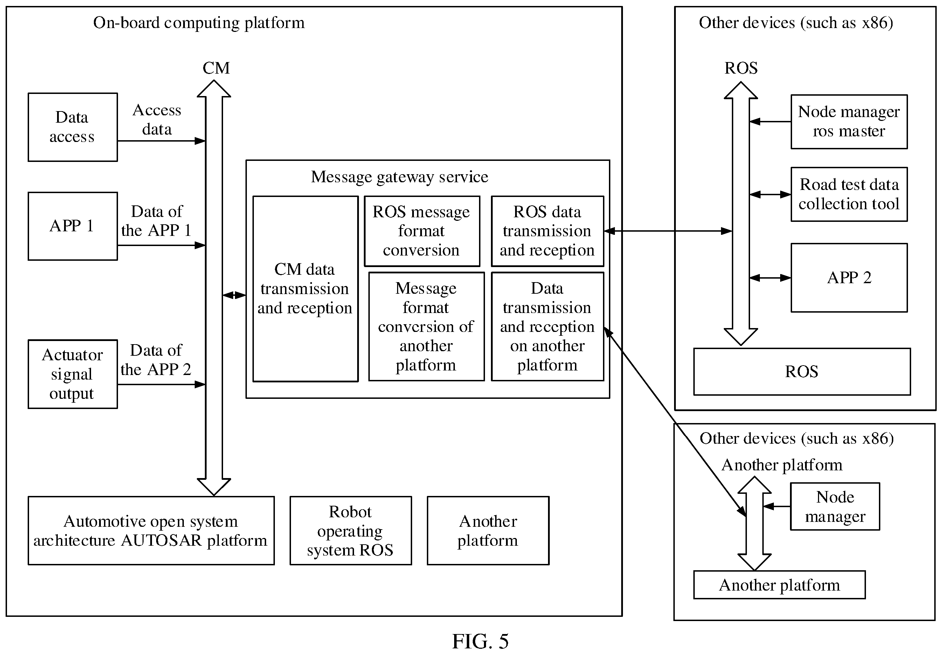

Currently, intelligent driving software is usually developed based on the AUTOSAR adaptive platform and a platform other than the AUTOSAR adaptive platform, for example, an ROS platform. FIG. 4 is a diagram of communication between an AUTOSAR platform and an ROS platform according to an embodiment of this application. In the method, a proprietary protocol is defined, and the protocol includes all structures that may need to communicate with each other. The AUTOSAR platform includes a CM data and private data conversion module, and the ROS platform includes a private data and ROS data conversion module. A specific communication process may be as follows: converting obtained CM data into private data by using the CM data and private data conversion module, and transmitting the private data from the AUTOSAR platform to the ROS platform, where the private data meets the proprietary protocol; and after the ROS platform receives the private data, converting the private data into ROS data by using the private data and ROS data conversion module, and transmitting the ROS data on the ROS platform. In this method, the AUTOSAR platform is highly decoupled from the ROS platform, but a development workload is heavy. Manual coding is required to implement functions of the CM data and private data conversion module and the private data and ROS data conversion module, which is highly customized and difficult to reuse. FIG. 5 is another diagram of communication between an AUTOSAR platform and a ROS platform according to an embodiment of this application. In the method, the AUTOSAR platform integrates the ROS platform and another platform, and the AUTOSAR platform provides a message gateway service. After CM data is obtained, the message gateway service converts the CM data into ROS platform data, and uses a cross-device communication capability of the ROS platform to perform cross-device communication. Correspondingly, data collection tool software and driving status visualization tool software on a device of the ROS platform can be used to receive the ROS platform data. In this method, the message gateway service can greatly simplify development workloads of a user. However, high-risk open-source software such as an ROS needs to be integrated into the AUTOSAR platform. As a result, software management on the AUTOSAR platform is disordered and maintenance costs are high. To resolve the foregoing problems, embodiments of this application provide the following solutions.

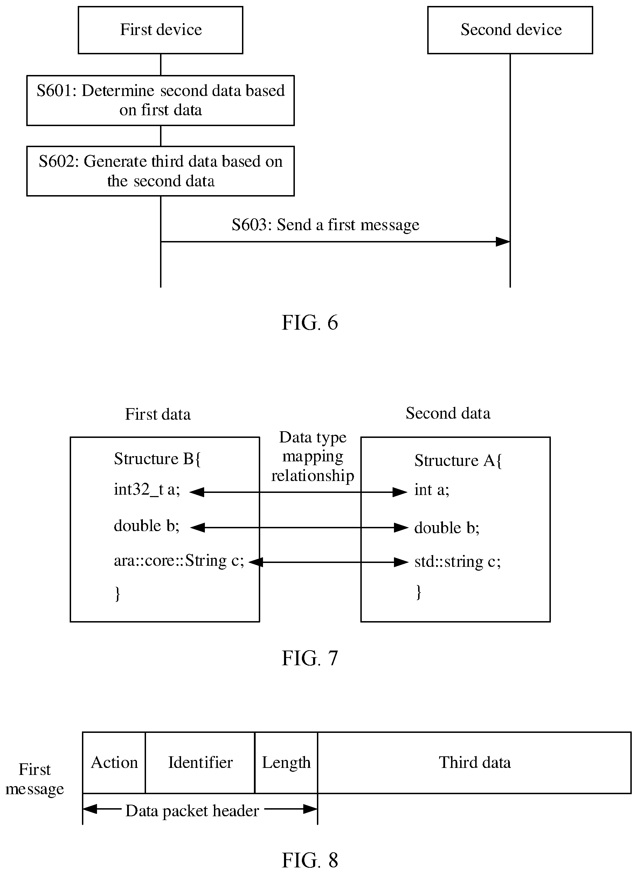

Based on the structures of the intelligent driving device provided in FIG. 1 and FIG. 2 and the vehicle traveling control apparatus used in the intelligent driving device provided in FIG. 3, an embodiment of this application provides a communication method. The method may be applied to an intelligent driving scenario, the intelligent driving includes intelligent assisted driving, autonomous driving, unmanned driving, and the like. This is not limited in embodiments of this application. Refer to FIG. 6. The method may include the following step S601 to step S603.

Step S601: A first device determines second data based on first data.

The first data and the second data meet a data type mapping relationship. The first data may be data collected by the first device, for example, may include exposure time of a camera in the first device and image data captured by the camera through exposure. Optionally, the exposure time of the camera may be predefined or determined by the first device. This is not limited in this embodiment of this application. Optionally, the first data may be stored in an extensible markup language (extensible markup language, XML) file of an AUTOSAR platform, and the XML file of the AUTOSAR may be referred to as an ARXML file for short. The second data may be stored in an MSG file of an ROS platform.

That a first device determines second data based on first data may mean that the first device determines the second data based on the first data and the data type mapping relationship. The data type mapping relationship includes a conversion relationship between data formats of different protocols. For example, the first data supports a communication protocol of the AUTOSAR platform, the second data supports a communication protocol of the ROS platform, and the data type mapping relationship includes a conversion relationship between a data format that supports the communication protocol of the AUTOSAR platform and a data format that supports the communication protocol of the ROS platform. The data type mapping relationship may be predefined or agreed on in a protocol. This is not limited in this embodiment of this application.

The first data and the second data have different data formats, and the first data and the second data carry same information. For example, the information carried in the first data and the second data may be the exposure time of the camera and the image data captured by the camera through exposure.

In an example, FIG. 7 is a diagram of a data type mapping relationship. In FIG. 1, the first data includes a structure B, and the second data includes a structure A. The structure B includes an int32 _t-type field a, a double-type field b, and an ara::core::String-type field c. The first device determines the second data based on the first data and the data type mapping relationship. The second data is the structure A, and the structure A includes an int-type field a, a double-type field b, and an std::string-type field c. The data type mapping relationship indicates a mapping relationship between the structure A and the structure B, for example, a conversion relationship between the int-type in the structure A and the int32 _t-type in the structure B, a conversion relationship between the double-type in the structure A and the double-type in the structure B, and a conversion relationship between the ara::core:: String-type in the structure B and the std::string-type.

Step S602: The first device generates third data based on the second data.

The third data includes the second data and description information of the second data, and the description information of the second data includes one or more of the following: a data format of the second data, a length of the second data, or a message digest algorithm 5 (message digest algorithm 5, MD 5) code of the second data. Certainly, the description information of the second data includes but is not limited to the foregoing example content, and may further include other content. This is not limited herein. The data format of the second data may be a name of a data type of the second data. For example, the second data is data of a camera lens sensor, and the data format of the second data may be a structure named camera data.

That the first device generates third data based on the second data may be that the first device serializes the second data to generate the third data. Serialization may mean converting structured data into binary data applicable to communication. Deserialization is a reverse process of serialization, and deserialization means converting a binary data stream received in communication into structured data.

Step S603: The first device sends a first message to a second device.

The first message includes a data packet header and the third data. The data packet header includes one or more of the following: an action (action) field, an identifier (identifier, ID) field, or a length (length) field. Specifically, FIG. 8 is a diagram of a format of the first message. Optionally, the action field may occupy two bytes (bytes), the identifier field may occupy 64 bytes, and the length field may occupy four bytes. The action field indicates a type of the first message. The action field is a first value, the first value indicates that the first message is a publish message, and the publish message is used by the second device to send the third data to a receiving component indicated by the identifier field. The action field is a second value, and the second value indicates that the first message is a subscription message. The identifier field includes a topic, and the topic indicates a type of data published/subscribed to by the first device. The identifier field may further include a sending component and the receiving component. In this case, the subscription message is used to enable the receiving component indicated by the identifier field to send, to the sending component indicated by the identifier field, information that meets a subscription requirement indicated by the topic and the third data. The length field indicates a length of the third data. Optionally, the first message may meet a transmission control protocol/internet protocol (Transmission Control Protocol/Internet Protocol, TCP/IP). When the identifier field does not include information about the sending component and information about the receiving component, and the first message is a publish message, the first device is the sending component of the third data. When the identifier field does not include information about the sending component and information about the receiving component, and the first message is a subscription message, the first device is a receiving component whose information meets the subscription requirement indicated by the third data.

The type of the first message may include the publish message or the subscription message. The action field may be an enumerated value. For example, the first value may be PUBLISH, and the second value may be SUBSCRIBE. That the first value is PUBLISH indicates that the first message is the publish message, and the publish message is used by the first device to send the third data to the second device. That the second value is SUBSCRIBE indicates that the first message is the subscription message, and the subscription message indicates that the first device needs to receive, from the second device, the information that meets the subscription requirement indicated by the third data. For example, the identifier field includes a published or subscribed topic, and the topic is referred to as an instance short name on the AUTOSAR platform and referred to as a topic on the ROS platform. The topic may indicate sensor-related data, or camera lens-related data. The identifier field may further include a component that requests the topic, or a component that expects to publish the topic. The component may be, for example, an application. In an example, the first device is a device that uses the AUTOSAR platform, the second device is a device that uses the ROS platform, the first device includes three pieces of application software: data access, an APP 1, and an actuator signal output, and the second device includes three pieces of application software: a road test data collection tool, a visualization tool, and an APP 2. For example, in the data packet header of the first message, the action field is PUBLISH, the identifier field is (APP 1, cam 1, APP 2), and the length field occupies 4 bytes. That the action field is PUBLISH indicates that the first message is a publish message, and that the identifier field is (APP 1, cam 1, APP 2) indicates that data carried in the first message is data that is related to the camera lens cam 1 and that is published by the APP 1 in the first device, where the data may be received by the APP 2 in the second device. For another example, in the data packet header of the first message, the action field is SUBSCRIBE, the identifier field is (APP 1, lidar 2, APP 2), and the length field occupies 4 bytes. That the action field is SUBSCRIBE indicates that the first message is a subscription message, and that the identifier field is (APP 1, lidar 2, APP 2) indicates that the APP 1 in the first device expects to receive data that is related to the lidar 2 and that is published by the APP 2 in the second device.

In a possible implementation, after the first device sends the first message to the second device, the second device receives the first message from the first device.

Optionally, after receiving the first message from the first device, the second device parses the first message, and determines that the first message is the publish message or the subscription message. Parsing the first message includes parsing the data packet header included in the first message, and determining, based on the action field in the data packet header, that the first message is the publish message or the subscription message.

If the first message is the publish message, the third data included in the first message is stored. If the first message is the subscription message, the second device sends a response message to the first device, where the response message includes data that meets a subscription requirement indicated by the third data.

The response message includes the data that meets the subscription requirement indicated by the third data. For example, the data that meets the subscription requirement indicated by the third data may be fourth data, the fourth data may be carried in a second message, and the second message includes a data packet header. For related descriptions in the data packet header, refer to the data packet header in the first message. After receiving the fourth data from the second device, the first device processes the fourth data. The processing process may be similar to an inverse process of processing the third data. A specific process is as follows. For example, the first device determines fifth data based on the fourth data, the fourth data includes the fifth data and description information of the fifth data, and the description information of the fifth data includes but is not limited to one or more of the following: a data format of the fifth data, a length of the fifth data, or an MD 5 code of the fifth data. That the first device determines fifth data based on the fourth data may be that the first device performs deserialization processing on the fourth data to determine the fifth data, and then the first device determines sixth data based on the fifth data, where the fifth data and the sixth data meet a data type mapping relationship, and the first device may determine the sixth data based on the fifth data and the data type mapping relationship. For the data type mapping relationship, refer to the foregoing descriptions. Details are not described herein again.

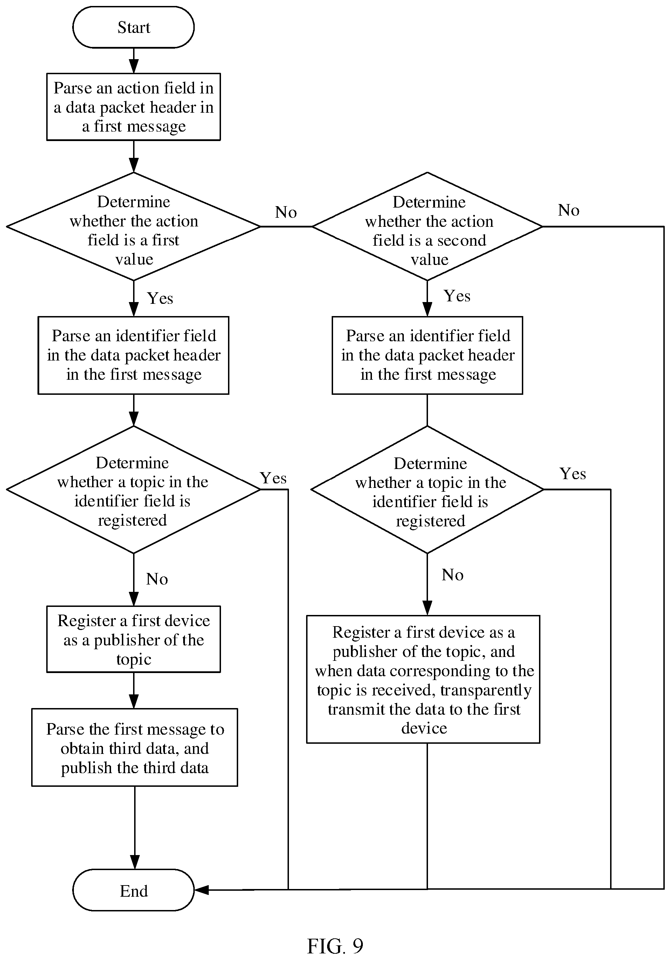

In a possible implementation, after receiving the first message, the second device processes the first message. A processing process is shown in FIG. 9. First, an action field in a data packet header in the first message is parsed, to determine whether the action field is a first value. The first value corresponds to PUBLISH, which is specifically as follows.
(1) If the action field is the first value, the second device parses an identifier field in the data packet header in the first message, to determine whether a topic in the identifier field is registered; and if the topic is not registered, the first device is registered as a publisher of the topic, the first message is parsed to obtain third data, and the third data is published.
(2) If the action field is not the first value, whether the action field is a second value is determined, where the second value corresponds to SUBSCRIBE; and if the action field is the second value, the second device parses the identifier field in the data packet header in the first message, to determine whether a topic in the identifier field is registered; and if the topic is not registered, the first device is registered as a receiver of the topic, and when data corresponding to the topic is received, the data is transparently transmitted to the first device.

It should be noted that the embodiment shown in FIG. 6 is described by using an example in which the first device is a device that uses the AUTOSAR platform and the second device is a device that uses the ROS platform. When the first device is a device that uses the ROS platform, and the second device is a device that uses the AUTOSAR platform, for a data processing process, refer to the data processing process in which the first device is a device that uses the AUTOSAR platform and the second device is a device that uses the ROS platform. Details are not described herein again.

In the method described in FIG. 6, in a manner in which the first device determines the second data based on the first data, the first data that supports a protocol in the first device may be converted into the second data that supports a protocol in the second device, and in a manner in which the first device generates the third data based on the second data, the third data can be correctly parsed by communication middleware in the second device. For example, the first device implements inter-software communication by using communication management CM middleware on an automotive open system architecture AUTOSAR platform, and the second device implements inter-software communication by using communication middleware on a robot operating system ROS platform. According to this application, cross-communication middleware and cross-device communication between the first device and the second device that are between different communication middleware can be implemented, to resolve a problem that data collection tool software, driving status visualization tool software, and the like that are developed based on the ROS platform cannot be used together with software developed based on the AUTOSAR platform. High-risk open-source software does not need to be installed in the first device, development is simple, and maintenance costs are low.

The foregoing describes in detail methods in embodiments of this application. The following provides the apparatuses in embodiments of this application.

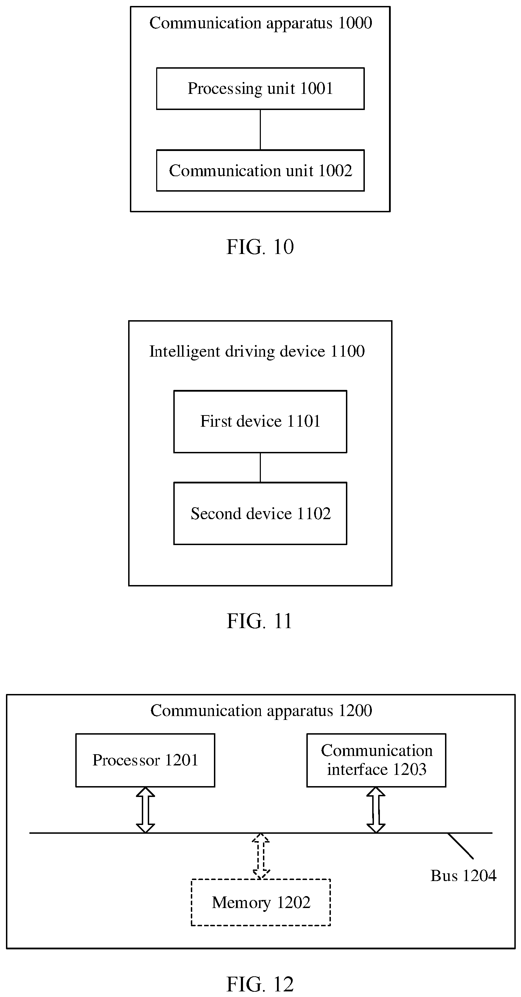

FIG. 10 is a diagram of a structure of a communication apparatus 1000 according to an embodiment of this application. The communication apparatus 1000 may include a processing unit 1001 and a communication unit 1002. The communication apparatus 1000 may be implemented by using hardware, software, or a combination of software and hardware. Detailed descriptions of the units are as follows.

The processing unit 1001 is configured to determine second data based on first data, where the first data and the second data meet a data type mapping relationship, and the data type mapping relationship includes a conversion relationship between data formats of different protocols.

The processing unit 1001 is configured to generate third data based on the second data, where the third data includes the second data and description information of the second data.

The communication unit 1002 is configured to send a first message to a second device, where the first message includes a data packet header and the third data.

In a possible implementation, the first data and the second data have different data formats, and the first data and the second data carry same information.

In still another possible implementation, the description information of the second data includes one or more of the following: a data format of the second data, a length of the second data, or a message digest algorithm 5 MD 5 code of the second data.

In still another possible implementation, the data packet header includes one or more of the following: an action field, an identifier field, or a length field, where the action field indicates a type of the first message, the identifier field indicates a topic, or the identifier field indicates a topic and a receiving component and a sending component of the third data, and the length field indicates a length of the third data.

In still another possible implementation, the action field is a first value, the first value indicates that the first message is a publish message, and the publish message is used by the second device to send the third data to the receiving component indicated by the identifier field; or the action field is a second value, the second value indicates that the first message is a subscription message, and the subscription message is used to enable the receiving component indicated by the identifier field to send, to the sending component indicated by the identifier field, information that meets a subscription requirement indicated by the third data.

In still another possible implementation, the communication apparatus is a device that uses an automotive open system architecture AUTOSAR platform, and the second device is a device that uses a platform other than the AUTOSAR platform.

In still another possible implementation, the communication apparatus is an on-board computing platform, and the second device is a cockpit device.

For implementations and beneficial effects of the units, refer to corresponding descriptions in the method embodiment shown in FIG. 6.

FIG. 11 is a diagram of a structure of an intelligent driving device 1100 according to an embodiment of this application. The intelligent driving device 1100 includes a first device 1101 and a second device 1102.

The first device 1101 is configured to: determine second data based on first data, where the first data and the second data meet a data type mapping relationship, and the data type mapping relationship includes a conversion relationship between data formats of different protocols; generate third data based on the second data, where the third data includes the second data and description information of the second data; and send a first message to the second device, where the first message includes a data packet header and the third data.

The second device 1102 is configured to: receive the first message; if the first message is a publish message, store the third data included in the first message; and if the first message is a subscription message, send a response message to the first device, where the response message includes data that meets a subscription requirement indicated by the third data.

In a possible implementation, the second device 1102 is further configured to: parse the first message; and determine that the first message is the publish message or the subscription message.

In still another possible implementation, the first data and the second data have different data formats, and the first data and the second data carry same information.

In still another possible implementation, the description information of the second data includes one or more of the following: a data format of the second data, a length of the second data, or a message digest algorithm 5 MD 5 code of the second data.

In still another possible implementation, the data packet header includes one or more of the following: an action field, an identifier field, or a length field, where the action field indicates a type of the first message, the identifier field indicates a topic, or the identifier field indicates a topic and a receiving component and a sending component of the third data, and the length field indicates a length of the third data.

In still another possible implementation, the action field is a first value, the first value indicates that the first message is a publish message, and the publish message is used by the second device to send the third data to the receiving component indicated by the identifier field; or the action field is a second value, the second value indicates that the first message is a subscription message, and the subscription message is used to enable the receiving component indicated by the identifier field to send, to the sending component indicated by the identifier field, information that meets a subscription requirement indicated by the third data.

In still another possible implementation, the first device 1101 is a device that uses an automotive open system architecture AUTOSAR platform, and the second device 1102 is a device that uses a platform other than the AUTOSAR platform.

In still another possible implementation, the first device 1101 is an on-board computing platform, and the second device 1102 is a cockpit device.

For implementations and beneficial effects of the units, refer to corresponding descriptions in the method embodiment shown in FIG. 6.

FIG. 12 is a diagram of a communication apparatus 1200 according to an embodiment of this application. The communication apparatus 1200 includes a processor 1201 and a communication interface 1203, and optionally, further includes a memory 1202. The processor 1201, the memory 1202, and the communication interface 1203 are connected to each other through a bus 1204.

The memory 1202 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1202 is configured to store a related computer program and data. The communication interface 1203 is configured to receive and send data.

The processor 1201 may be one or more central processing units (central processing unit, CPU). When the processor 1201 is one CPU, the CPU may be a single-core CPU, or may be a multi-core CPU.

The processor 1201 in the communication apparatus 1200 is configured to read the computer program stored in the memory 1202, to perform the following operations:
determining second data based on first data, where the first data and the second data meet a data type mapping relationship, and the data type mapping relationship includes a conversion relationship between data formats of different protocols;
generating third data based on the second data, where the third data includes the second data and description information of the second data; and
sending a first message to a second device, where the first message includes a data packet header and the third data.

In a possible implementation, the first data and the second data have different data formats, and the first data and the second data carry same information.

In still another possible implementation, the description information of the second data includes one or more of the following: a data format of the second data, a length of the second data, or a message digest algorithm 5 MD 5 code of the second data.

In still another possible implementation, the data packet header includes one or more of the following: an action field, an identifier field, or a length field, where the action field indicates a type of the first message, the identifier field indicates a topic, or the identifier field indicates a topic and a receiving component and a sending component of the third data, and the length field indicates a length of the third data.

In still another possible implementation, the action field is a first value, the first value indicates that the first message is a publish message, and the publish message is used by the second device to send the third data to the receiving component indicated by the identifier field; or the action field is a second value, the second value indicates that the first message is a subscription message, and the subscription message is used to enable the receiving component indicated by the identifier field to send, to the sending component indicated by the identifier field, information that meets a subscription requirement indicated by the third data.

In still another possible implementation, the communication apparatus is a device that uses an automotive open system architecture AUTOSAR platform, and the second device is a device that uses a platform other than the AUTOSAR platform.

In still another possible implementation, the communication apparatus is an on-board computing platform, and the second device is a cockpit device.

For implementations and beneficial effects of the operations, refer to corresponding descriptions in the method embodiment shown in FIG. 6.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A communication method, applied to an intelligent driving scenario, wherein the method comprises:
determining, by a first device, second data based on first data, wherein the first data and the second data meet a data type mapping relationship, and the data type mapping relationship comprises a conversion relationship between data formats of different protocols;
generating, by the first device, third data based on the second data, wherein the third data comprises the second data and description information of the second data; and
sending, by the first device, a first message to a second device, wherein the first message comprises a data packet header and the third data.

2. The method according to claim 1, wherein the first data and the second data have different data formats, and the first data and the second data carry same information.

3. The method according to claim 1 or 2, wherein
the description information of the second data comprises one or more of the following: a data format of the second data, a length of the second data, or a message digest algorithm 5 MD 5 code of the second data.

4. The method according to any one of claims 1 to 3, wherein the data packet header comprises one or more of the following: an action field, an identifier field, or a length field, wherein the action field indicates a type of the first message, the identifier field indicates a topic, or the identifier field indicates a topic and a receiving component and a sending component of the third data, and the length field indicates a length of the third data.

5. The method according to claim 4, wherein
the action field is a first value, the first value indicates that the first message is a publish message, and the publish message is used by the second device to send the third data to the receiving component indicated by the identifier field; or
the action field is a second value, the second value indicates that the first message is a subscription message, and the subscription message is used to enable the receiving component indicated by the identifier field to send, to the sending component indicated by the identifier field, information that meets a subscription requirement indicated by the third data.

6. The method according to any one of claims 1 to 5, wherein
the first device is a device that uses an automotive open system architecture AUTOSAR platform, and the second device is a device that uses a platform other than the AUTOSAR platform.

7. The method according to claim 6, wherein
the first device is an on-board computing platform, and the second device is a cockpit device.

8. An intelligent driving device, wherein the intelligent driving device comprises a first device and a second device;
the first device is configured to:
determine second data based on first data, wherein the first data and the second data meet a data type mapping relationship, and the data type mapping relationship comprises a conversion relationship between data formats of different protocols;
generate third data based on the second data, wherein the third data comprises the second data and description information of the second data; and
send a first message to the second device, wherein the first message comprises a data packet header and the third data; and
the second device is configured to:
receive the first message; and
if the first message is a publish message, store the third data comprised in the first message; or
if the first message is a subscription message, send a response message to the first device, wherein the response message comprises data that meets a subscription requirement indicated by the third data.

9. The intelligent driving device according to claim 8, wherein the second device is further configured to:
parse the first message; and
determine that the first message is the publish message or the subscription message.

10. The intelligent driving device according to claim 8 or 9, wherein
the first data and the second data have different data formats, and the first data and the second data carry same information.

11. The intelligent driving device according to any one of claims 8 to 10, wherein
the description information of the second data comprises one or more of the following: a data format of the second data, a length of the second data, or a message digest algorithm 5 MD 5 code of the second data.

12. The intelligent driving device according to any one of claims 8 to 11, wherein the data packet header comprises one or more of the following: an action field, an identifier field, or a length field, wherein the action field indicates a type of the first message, the identifier field indicates a topic, or the identifier field indicates a topic and a receiving component and a sending component of the third data, and the length field indicates a length of the third data.

13. The intelligent driving device according to claim 12, wherein
the action field is a first value, the first value indicates that the first message is the publish message, and the publish message is used by the second device to send the third data to the receiving component indicated by the identifier field; or
the action field is a second value, the second value indicates that the first message is the subscription message, and the subscription message is used to enable the receiving component indicated by the identifier field to send, to the sending component indicated by the identifier field, information that meets the subscription requirement indicated by the third data.

14. The intelligent driving device according to any one of claims 8 to 13, wherein
the first device is a device that uses an automotive open system architecture AUTOSAR platform, and the second device is a device that uses a platform other than the AUTOSAR platform.

15. The intelligent driving device according to claim 14, wherein
the first device is an on-board computing platform, and the second device is a cockpit device.

16. A communication apparatus, comprising a processor and a memory, wherein the memory and the processor are interconnected through a line, the processor is configured to obtain a computer program stored in the memory, and when the computer program is executed by the processor, the communication apparatus is configured to implement the method according to any one of claims 1 to 7.
